# EUROPEAN PATENT SPECIFICATION

(11) **EP 3 780 364 B1**
(45) Date of publication and mention of the grant of the patent: **27.05.2026**
(21) Application number: 19915532.6
(22) Date of filing: 12.11.2019
(51) Int. Cl.: H02K 29/10, H02K 11/22, H02K 21/14, B63B 34/20, H02K 7/11, H02K 7/116, H02K 49/10

(54) **ROTARY DEVICE AND POWER GENERATION SYSTEM**
DREHVORRICHTUNG UND ENERGIEERZEUGUNGSSYSTEM
DISPOSITIF ROTATIF ET SYSTÈME DE PRODUCTION D'ÉNERGIE

(30) Priority: 12.02.2019 JP 2019022274
(43) Date of publication of application: 17.02.2021
(73) Proprietor: Simple Tokyo Co., Ltd., Nishitokyo-shi, Tokyo 202-0005 (JP)
(72) Inventor: MIYAGAWA, Megumi, Nishitokyo-shi Tokyo 2020005 (JP); KONDO, Keiko, Nishitokyo-shi Tokyo 2020005 (JP); MIYAGAWA, Masaaki, Nishitokyo-shi Tokyo 2020005 (JP)
(74) Representative: Mewburn Ellis LLP
(86) International application number: PCT/JP2019/044299
(87) International publication number: WO 2020/166152

(56) References cited:
- EP-A1- 2 806 545
- EP-A1- 3 355 455
- WO-A1-2013/032072
- WO-A1-95/12241
- DE-A1- 19 647 469
- DE-A1- 4 328 042
- JP-A- 2006 121 842
- JP-A- H0 576 164
- JP-B1- 3 693 669
- JP-U- S61 176 955
- US-A- 5 481 143
- US-A1- 2016 285 329

## Description

### FIELD OF THE INVENTION

The present invention relates to a rotation apparatus for effectively producing a rotational moment by a magnetic force drive and a power generation system for generating electricity using the rotation apparatus.

### BACKGROUND ART

### RELATED ART DOCUMENT

Conventionally, a magnetic force rotation apparatus using the repulsion force of permanent magnets is well-known. For example, a magnetic force repulsion motor described in Patent Document 1 circumferentially arranges a plurality of permanent magnets on a fixed member and a rotational member so as to produce a rotational force by using the magnetic repulsion force of the permanent magnets of the both members.

Also, in Patent Document 2, described is a magnetic force rotation apparatus configured by combining permanent magnets and electromagnets so as to produce a rotational torque for rotating rotation bodies by using the magnetic repulsion force of both the permanent magnets and the electromagnets.

That is, according to the magnetic force rotation apparatus described in Patent Document 2, first and second magnetic rotation bodies for producing rotatory power of the rotation axis are fixed with this axis pivotally, and first and second electromagnets energized in synchronization with the rotation of the rotation bodies are arranged to oppose to the first and second magnetic rotation bodies through a magnetic gap. The first and second electromagnets are fixed to a yoke that forms magnetic paths. Balancers made of a non-magnetic material for keeping balance of a plurality of board-shaped magnets that provide rotation power producing magnetic field and the rotation bodies are located on a disk of each of the first and second magnetic rotation bodies. Each board-shaped magnet is arranged to have a certain angle D with respect to the radius axis of the disk. A sensor for detecting the rotation position of the first and second magnetic rotation bodies is provided in one of these first and second magnetic rotation bodies. The first and second magnetic rotation bodies are energized when the lead board-shaped magnet in the rotating direction of the board-shaped magnets passes the detector. These first and second magnetic rotation bodies are de-energized when the rearmost board-shaped magnet in the rotating direction of the board-shaped magnets passes the detector.

EP2806545A1 discloses a permanent magnet-type rotating machine comprising: a rotor which has permanent magnets disposed thereon; a stator which has electromagnets disposed thereon; a positional information acquisition unit that acquires positional information of permanent magnets; and an electromagnet controller that turns on/off the electromagnets based on the positional information, the electromagnet includes a first electromagnetic coil that excites the magnetic pole of the core that faces the magnetic pole of the permanent magnet to a polarity opposite to a polarity of the magnetic pole of the permanent magnet and a second electromagnetic coil, that excites the magnetic pole of the core that faces the magnetic pole of the permanent magnet to the same polarity as a polarity of the magnetic pole of the permanent magnet, the first electromagnetic coil and the second electromagnetic coil are coaxially arranged, the electromagnet controller turns on the second electromagnetic coil in a period of time from turning on to turning off of the first electromagnetic coil and turns on the first electromagnetic coil before residual magnetism in the core by the second electromagnetic coil becomes zero after the second electromagnetic coil is turned off, based on the positional information.

DE4328042A1 discloses a rotating element that is an encoder disc which has recesses and periodically interrupts a light beam which is transmitted by a light transmitter and is received by a light receiver, two standard reflex couplers, each having a light receiver and each having a light transmitter being provided for scanning the encoder disc and being arranged in such a manner that the light transmitter of the one reflex coupler interacts with the light receiver of the other reflex coupler, and vice versa.

DE19647469A1 discloses a magnetic planetary gearbox that has a driving shaft and a coaxial driven shaft, each connected to at least one wheel. Each wheel is provided with alternatingly polarised magnets around its periphery and torque is transmitted without contact between the wheels by the magnetic fields. A further wheel is present which is provided with alternatingly polarised magnets around its periphery and whose axis is parallel to the two shafts. The extra wheel and the other wheels in any arbitrary arrangement form the wheels of a planetary gearbox that has a sun gear, a annular gear and planetary gears. The planetary gears roll around the sun and ring gears. One planetary gear is fixed to the axle of each shaft.

### PATENT DOCUMENT

Patent Document 1 : Japanese Patent Publication No. 2006-238596A
Patent Document 2 : Japanese Patent No. 2968918B

### SUMMARY OF THE INVENTION

### PROBLEM TO BE SOLVED BY THE INVENTION

However, if the magnetic force rotation apparatus is formed only by the permanent magnets as described in Patent Document 1, the following problem may occur. That is, in case that the rotational side permanent magnet moved to separate from the fixed side permanent magnet, the magnetic repulsion force between these permanent magnets acted as driving force toward the front of the rotation direction, whereas in case that the rotational side permanent magnet moved to approach to the fixed side permanent magnet, the magnetic repulsion force between these permanent magnets acted as big resistive force to stop the driving force toward the front of the rotation direction. Due to the influence in magnetic force to act as the resistance of the driving force toward the front of the rotation direction, in practice, it was impossible to rotate the rotational side permanent magnet with respect to the fixed side permanent magnet.

The magnetic force rotation apparatus described in Patent Document 2 also has the following problems. That is, the constitution thereof was complicated because it was formed from not only permanent magnets and electromagnets but also rotation balancers, and because the apparatus utilized no torque of the rotation bodies, it was difficult to obtain necessarily enough energy efficiency.

The present invention intends to solve such problems, and the object of the present invention is to provide a rotation apparatus and a power generation system that can effectively maintain and utilize rotation energy by means of a simple constitution.

### MEANS TO SOLVE THE PROBLEM

According to the present invention there is provided a power generation system as specified in claim 1.

It is preferred that the rotation transmission includes a first magnetic gear mechanism having the second disk-shaped rotation body capable of rotating around a second rotation axis, and a plurality of second permanent magnets arranged at a peripheral part of the second disk-shaped rotation body so that N-poles and S-poles thereof are distributed alternately, and a second magnetic gear mechanism having a third disk-shaped rotation body capable of rotating around a third rotation axis, and a plurality of third permanent magnets arranged at a peripheral part of the third disk-shaped rotation body so that N-poles and S-poles thereof are distributed alternately. The plurality of second permanent magnets of the first magnetic gear mechanism and the plurality of third permanent magnets of the second magnetic gear mechanism are arranged to close to each other so that the second magnetic gear mechanism rotates in a predetermined direction by means of an attractive force and a repulsive force between the plurality of second permanent magnets and the plurality of third permanent magnets when the first magnetic gear mechanism rotates. Thus, rotation energy can be effectively maintained and utilized by means of a simple constitution.

It is further preferred that a diameter of the second disk-shaped rotation body is larger than a diameter of the third disk-shaped rotation body, and that the third disk-shaped rotation body is arranged inside of the second disk-shaped rotation body.

It is still further preferred that the rotation transmission includes a third magnetic gear mechanism having a fourth disk-shaped rotation body capable of rotating around a fourth rotation axis, and a plurality of fourth permanent magnets arranged at a peripheral part of the fourth disk-shaped rotation body so that N-poles and S-poles thereof are distributed alternately. The third disk-shaped rotation body is arranged inside of the second disk-shaped rotation body. The plurality of third permanent magnets of the second magnetic gear mechanism and the plurality of fourth permanent magnets of the third magnetic gear mechanism are arranged to close to each other so that the third magnetic gear mechanism rotates in a predetermined direction by means of an attractive force and a repulsive force between the plurality of third permanent magnets and the plurality of fourth permanent magnets when the second magnetic gear mechanism rotates.

### EFFECT OF THE INVENTION

According to the rotation apparatus of the present invention, a pair of electromagnets located at static positions in proximity to a plurality of first permanent magnets arranged at a peripheral part of the first disk-shaped rotation body are alternately energized in response to rotational positions of the N-poles and the S-poles of the permanent magnets. The permanent magnet moves in a predetermined direction by an attractive force and a repulsive force between the energized electromagnet and the permanent magnet so as to rotate the first disk-shaped rotation body. Thus, by means of the attractive force and the repulsive force between the energized electromagnet and the proximity permanent magnet, the first disk-shaped rotation body effectively rotates. As a result, it is possible to effectively maintain and utilize rotation energy by means of a simple constitution.

According to the power generation system, the above-mentioned rotation apparatus is used. Also since the rotation transmission with non-contact magnetic gear mechanisms are used, there is no frictional resistance between the magnetic gear mechanisms and therefore the electrical power can be effectively generated using the rotational energy maintained effectively with little loss. As a result, the rotation energy can be effectively maintained and utilized by means of a simple constitution and thus efficient power accumulation can be expected.

### BRIEF DESCRIPTION OF DRAWINGS

FIG. 1 is a front view schematically illustrating a constitution of a rotation apparatus as an embodiment of the present invention;
FIG. 2 is a side view schematically illustrating a constitution of a main part of the rotation apparatus shown in FIG. 1;
FIG. 3 is a view schematically illustrating a constitution for detecting positions of N-poles and S-poles of the permanent magnet in the rotation apparatus shown in FIG. 1;
FIG. 4 is a view for describing rotational operations of the rotation apparatus shown in FIG. 1;
FIG. 5 is a view schematically illustrating a constitution of a power generation system provided with the rotation apparatus shown in FIG. 1;
FIG. 6 is a front view schematically illustrating a constitution of a main part of the power generation system shown in FIG. 5; and
FIG. 7 is a side view schematically illustrating a constitution of the main part of the power generation system shown in FIG. 5.

### DESCRIPTION OF THE PREFERRED EMBODIMENT

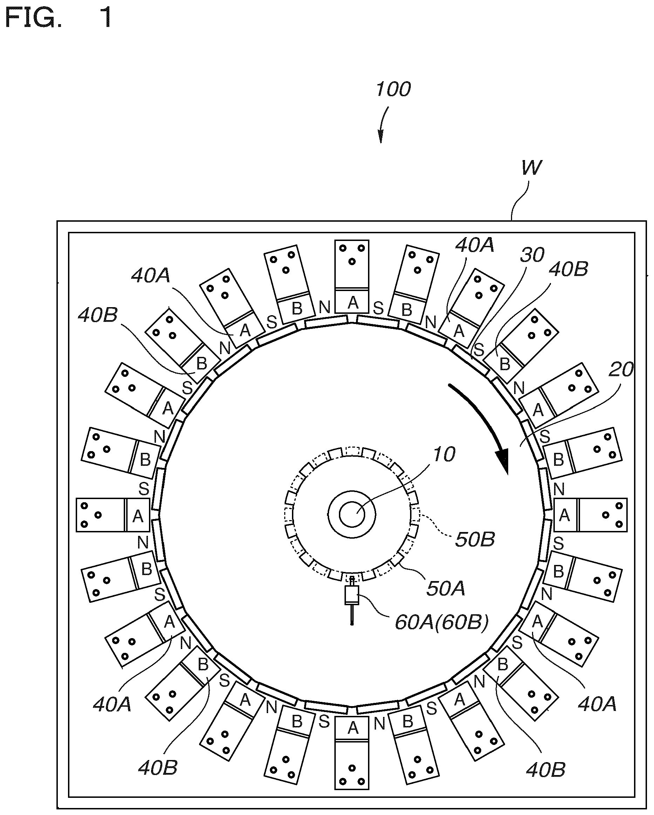

Hereinafter, an embodiment of the rotation apparatus and the power generation system according to the present invention will be described with reference to FIG. 1 to FIG. 7.

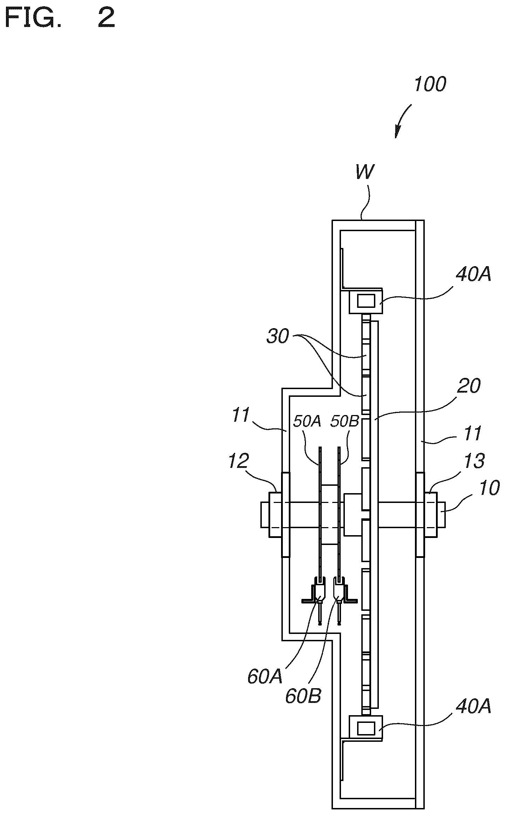

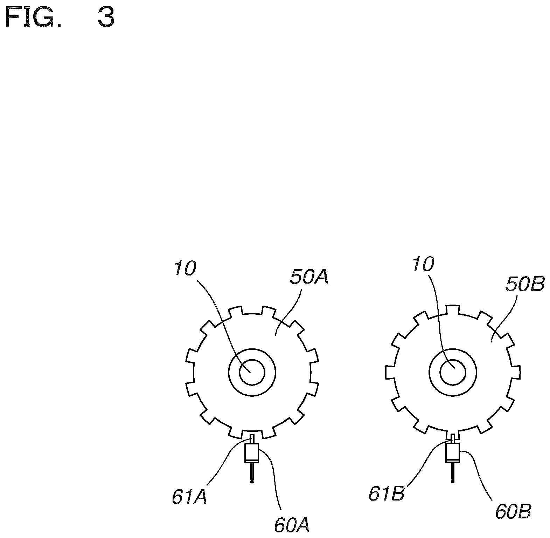

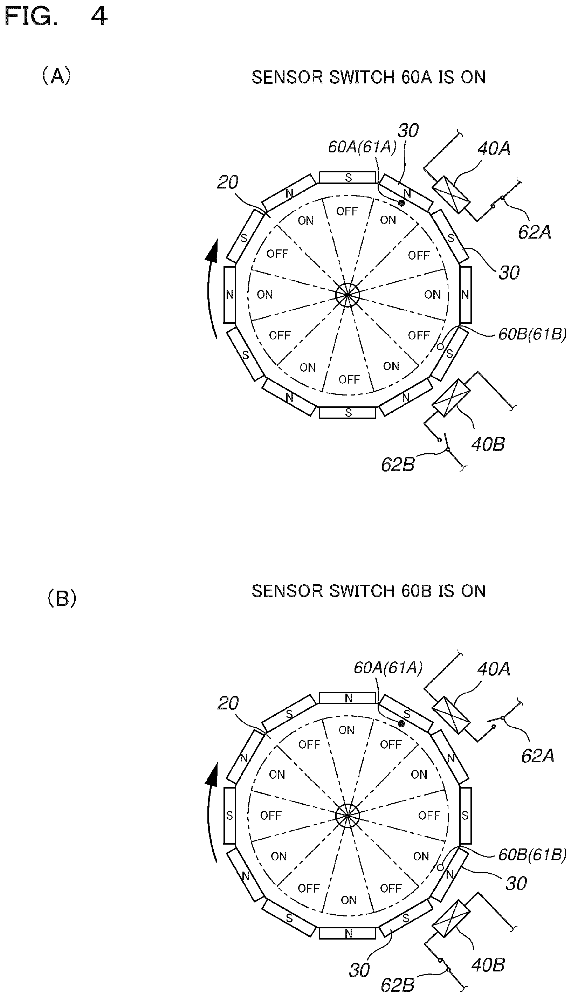

FIG. 1 schematically illustrates from the front a constitution of the rotation apparatus 100 as the embodiment of the present invention. In the figure, "A" indicates an electromagnet 40A, and "B" indicates an electromagnet 40B. FIG. 2 schematically illustrates from the side a constitution of the rotation apparatus 100 of this embodiment. FIG. 3 schematically illustrates a constitution of sensor switches 60A and 60B for detecting positions of N-poles and S-poles of the permanent magnet shows constitution and positional relationship of sensor perception board 50A of the present embodiment sensor perception boards 50A and 50B and sensor switch 60A and 60B. FIG. 4 describes rotational operations of the rotation apparatus 100 of this embodiment. In the figure, (A) indicates the conditions where the first electromagnet 40A is energized by the operation of the first sensor switch 60A, and (B) indicates the conditions where the second electromagnet 40B is energized by the operation of the second sensor switch 60B. Note that, in FIG. 1, in order to distinguish the sensor perception boards 50A and 50B, the sensor perception board 50A is shown by a solid line and the sensor perception board 50B is shown by a broken line.

As shown in FIG. 1 to FIG. 3, the rotation apparatus 100 in this embodiment is provided with a first rotation axis 10, a first disk-shaped rotation body 20 fixed to the first rotation axis 10 to be rotatable around this first rotation axis 10, a plurality of first permanent magnets 30 arranged at a peripheral part of the first disk-shaped rotation body 20 so that N-poles and S-poles thereof are distributed alternately, a plurality of pairs of electromagnets 40A and 40B arranged in a frame body W that is a fixed member (namely, arranged at static positions) with a predetermined interval, near the plurality of first permanent magnets 30, a pair of the sensor perception boards 50A and 50B arranged coaxially with the first disk-shaped rotation body 20, and a pair of the sensor switches 60A and 60B for respectively detecting rotation positions of the N-poles and the S-poles of the first permanent magnets 30 to alternately energize electrically the plurality of pairs of electromagnets 40A and 40B.

The first rotation axis 10 is configured by, for example, a steel rotation shaft, and supported by bearings 12 and 13 fixed to respectively sidewalls 11 of the frame body W to smoothly rotate.

The first disk-shaped rotation body 20 is coaxially fixed to the first rotation axis 10. In this embodiment, the plurality of first permanent magnets 30 (twenty-four first permanent magnets 30) are arranged with a predetermined interval at a peripheral part of the first disk-shaped rotation body 20 so that their poles are distributed alternately.

As for the first permanent magnet 30, a stick-shaped neodymium magnet is used, for example. In this embodiment, each of the plurality of (twenty-four) first permanent magnets 30 is shaped in for example a rectangular parallelepiped shape. Two opposed side faces of the rectangular parallelepiped shape configure magnetic faces of the N-pole and the S-pole, respectively. These plurality of first permanent magnets 30 are arranged as aforementioned so that polarities of the magnetic poles become the alternation at the peripheral part of the first disk-shaped rotation body 20. Thus, it is possible to form magnetic flows between the N-pole and S-pole permanent magnets 30. It should be noted that the shape of the permanent magnets 30 is not limited to the rectangular parallelepiped shape.

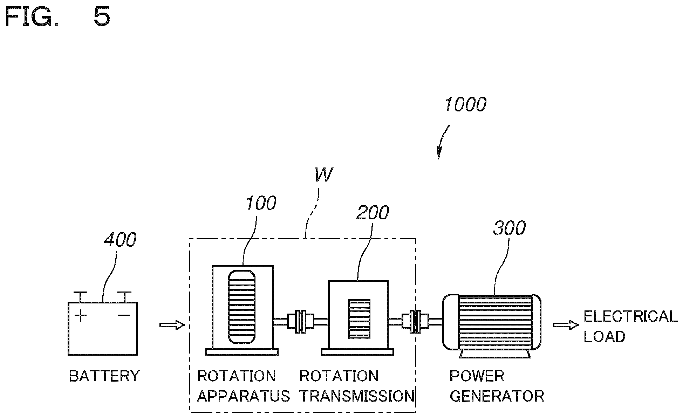

The electromagnets 40A and 40B are configured by winding coils around iron cores. As is well-known, when electrical current flows through the coil, magnetic flux and magnetic field will be produced through the iron core. Polarity of the iron core becomes N-pole or S-pole in accordance with the winding direction (or current direction) of the coil. Although it is not shown, the electromagnets 40A and 40B in this embodiment are connected to a power source as a battery 400 (FIG. 5) and electrical power from this power source is on/off controlled by means of a first switch 62A and a second switch 62B of the respective sensor switches 60A and 60B. In this embodiment, the plurality of (twenty-four) electromagnets 40A and 40B are arranged at static positions outside of the peripheral of the first disk-shaped rotation body 20 with a predetermine interval. That is, 12 electromagnets 40A and 12 electromagnets 40B are mounted as for the electromagnets 40A and 40B. These electromagnets 40A and 40B are located in proximity to the first permanent magnets 30, respectively.

The pair of sensor perception board 50A and 50B are provided with (twelve) convexo-concave portions at their outer circumferential ends arranged at positions that respectively correspond to positions of the N-poles and the S-poles of the first permanent magnets 30. Rotational positions of side edges of the convexo-concave portions correspond to rotational positions of front edges and rear edges of the N-poles or the S-poles, respectively. These pair of sensor perception board 50A and 50B are mounted on the first rotation axis 10 to displace with each other by a predetermined angle (an angle corresponding to one first permanent magnet 30 for example) in the rotation direction, and rotate together with the first disk-shaped rotation body 20.

The pair of sensor switches 60A and 60B are provided with a first sensor circuit consisting of a first photo-sensor 61A and a first switch 62A for turning on/off power supply paths of the first electromagnets 40A, and a second sensor circuit consisting of a second photo-sensor 61B and a second switch 62B for turning on/off power supply paths of the second electromagnets 40B. The first sensor circuit detects, via the first sensor perception board 50Aarranged coaxially with the first disk-shaped rotation body 20, the positions of the front edges and the rear edges of the N-poles of the first permanent magnets 30, to turn on the first switch 62A so as to energize the first electromagnet 40A when the position of the front edge of the N-pole of the first permanent magnet 30 is detected and to turn off the first switch 62A so as to de-energize the first electromagnet 40A when the position of the rear edge of the N-pole of the first permanent magnet 30 is detected. The second sensor circuit detects, via the second sensor perception board 50B arranged coaxially with the first disk-shaped rotation body 20, the positions of the front edges and the rear edges of the S-poles of the first permanent magnets 30, to turn on the second switch 62B so as to energize the second electromagnet 40B when the position of the front edge of the S-pole of the first permanent magnet 30 is detected and to turn off the second switch 62B so as to de-energize the second electromagnet 40B when the position of the rear edge of the S-pole of the first permanent magnet 30 is detected.

Next, rotational operations of the rotation apparatus 100 of this embodiment will be described with reference to FIG. 4.

The sensor switch 60A detects the positions of the front edge and the rear edge of the N-pole of the first permanent magnet 30 through the first sensor perception board 50A arranged coaxially with the first disk-shaped rotation body 20. When the position of the front edge of the N-pole of the first permanent magnet 30 is detected, the first switch 62A is turned on and the first electromagnet 40A is energized and excited as shown in FIG. 4(A). Thus, an attractive force with respect to the N-pole of the first permanent magnet 30 at the peripheral part of the first disk-shaped rotation body 20 and a repulsive force with respect to the S-pole of the first permanent magnet 30 at the peripheral part of the first disk-shaped rotation body 20 are produced so as to rotate the first disk-shaped rotation body 20 in the direction of the arrow. When the position of the rear edge of the N-pole of the first permanent magnet 30 is detected, the first switch 62A is turned off and the first electromagnet 40A is de-energized. On the other hand, the sensor switch 60B detects the positions of the front edge and the rear edge of the S-pole of the first permanent magnet 30 through the second sensor perception board 50B arranged coaxially with the first disk-shaped rotation body 20. When the position of the front edge of the S-pole of the first permanent magnet 30 is detected, the second switch 62B is turned on and the second electromagnet 40B is energized and excited as shown in FIG. 4(B). Thus, an attractive force with respect to the S-pole of the first permanent magnet 30 at the peripheral part of the first disk-shaped rotation body 20 and a repulsive force with respect to the N-pole of the first permanent magnet 30 at the peripheral part of the first disk-shaped rotation body 20 are produced so as to rotate the first disk-shaped rotation body 20 in the direction of the arrow. When the position of the rear edge of the S-pole of the first permanent magnet 30 is detected, the second switch 62B is turned off and the second electromagnet 40B is de-energized. By alternately energizing the first electromagnet 40A and the second electromagnet 40B, the first disk-shaped rotation body 20 rotates in the direction of the arrow shown in FIGS. 4 (A) and 4 (B) . In case that the apparatus has a plurality of pairs of the electromagnets 40A and 40B, by alternately energizing the plurality of electromagnet 40A and the plurality of electromagnet 40B similarly as the above explanation, bigger attractive force and bigger repulsive force can be produced.

As described above in detail, according to the rotation apparatus 100 of this embodiment, since the plurality of electromagnets 40A and the plurality of electromagnets 40B are alternately energized, it is possible to produce the attractive force and the repulsive force between the electromagnets 40A and 40B and the first permanent magnets 30 to rotate the first disk-shaped rotation body 20. Thus, it is possible to effectively maintain and utilize rotation energy by means of a simple constitution. Also, it is possible to obtain more stable rotation.

Furthermore, according to the rotation apparatus 100 of this embodiment, since the plurality of pairs of electromagnets 40A and 40B are arranged respectively at the positions corresponding to different poles of the plurality of first permanent magnets 30. Thus, an attractive force and a repulsive force of the permanent magnets 30 can be used at the position of the N-pole and the S-pole.

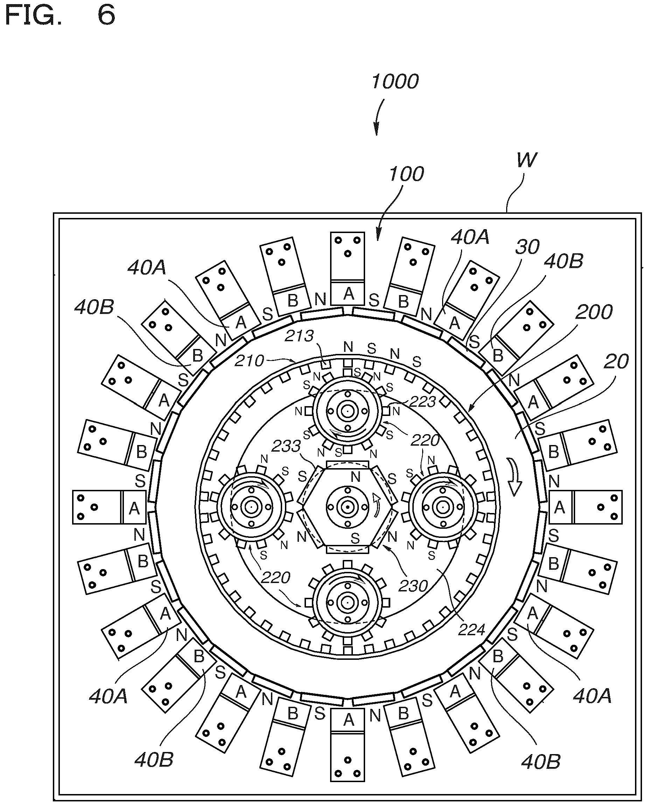

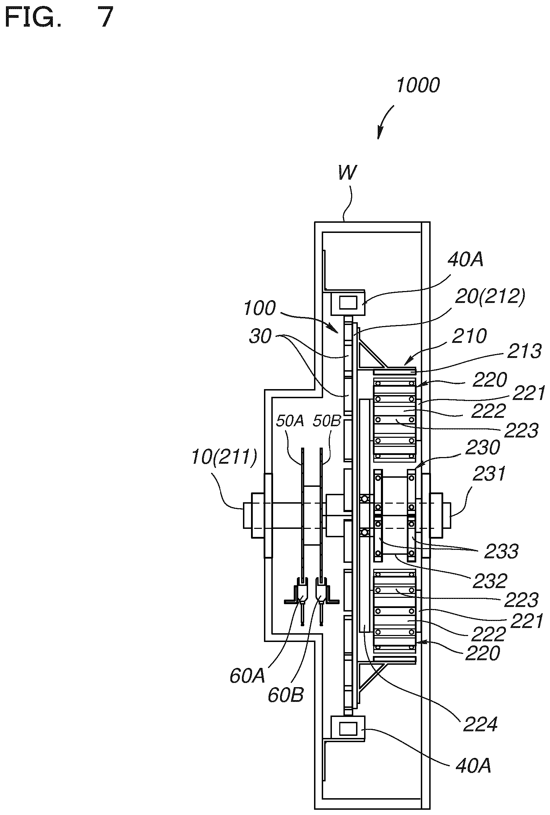

FIG. 5 schematically illustrates a constitution of a power generation system 1000 provided with the rotation apparatus 100 of this embodiment, FIG. 6 schematically illustrates a constitution of a main part of the power generation system 1000 seen from the front, and FIG. 7 schematically illustrates a constitution of the main part of the power generation system 1000 seen from the side.

The power generation system 1000 of this embodiment is provided with, as shown in FIG. 5, the rotation apparatus 100, a rotation transmission 200, a power generator 300 and a battery 400 that is a power supply for supplying electricity to the rotation apparatus 100. The rotation transmission 200 has an input shaft coupled with the first rotation axis 10 of the rotation apparatus 100 to be rotationally driven by the rotation apparatus 100 and an output shaft coupled with the power generator 300 to rotationally drive the generator 300. This rotation transmission 200 has functions to increase the rotational speed of the output shaft upper than the rotational speed of the input shaft. Also, as shown in FIGS. 6 and 7, in this embodiment, the rotation apparatus 100 and the rotation transmission 200 are integrated together and housed in a frame body W.

An electrical circuit (not shown) for supplying electricity from the power supply such as the battery 400 to the electromagnets 40A and 40B and to the sensor switches 60A and 60B is connected.

The rotation transmission 200 includes a first magnetic force gear mechanism 210, four second magnetic force gear mechanisms 220 and a third magnetic force gear mechanism 230. The first magnetic force gear mechanism 210 has a second disk-shaped rotation body 212 capable of rotating around a second rotation axis 211 and a plurality of (forty-two) of second permanent magnets 213 located at a peripheral part of this second disk-shaped rotation body 212 so that N-poles and S-poles of the second permanent magnets 213 are alternately distributed.

In this embodiment, the first rotation axis 10 and the first disk-shaped rotation body 20 of the rotation apparatus 100 are sheared as the second rotation axis 211 and the second disk-shaped rotation body 212. That is, the first rotation axis 10 of the rotation apparatus 100 functions for the second rotation axis 211, and the first disk-shaped rotation body 20 of the rotation apparatus 100 partially functions for the second disk-shaped rotation body 212. The plurality of first permanent magnets 30 are located at the peripheral part on one surface of the first disk-shaped rotation body 20 (the second disk-shaped rotation body 212), and the plurality of second permanent magnets 213 are located at the peripheral part on the other surface of the first disk-shaped rotation body 20 (the second disk-shaped rotation body 212). Each of the four second magnetic force gear mechanisms 220 has a third disk-shaped rotation body 222 capable of rotating around a third rotation axis 221 and a plurality of (twelve) third permanent magnets 223 located at a peripheral part of this third disk-shaped rotation body 222 so that N-poles and S-poles of the third permanent magnets 223 are alternately distributed. Also, the second disk-shaped rotation body 212 has a diameter different from that of the third disk-shaped rotation body 222. For example, the diameter of the second disk-shaped rotation body 212 is bigger than the diameter of the third disk-shaped rotation body 222. The second disk-shaped rotation body 212 has the plurality of second permanent magnets 213 with the number different from that of the third permanent magnets 223 of the third disk-shaped rotation body 222. For example, forty-two second permanent magnets 213 are arranged on the second disk-shaped rotation body 212. Even more particularly, the third disk-shaped rotation body 222 is arranged inside of the second disk-shaped rotation body 212. The four second magnetic force gear mechanisms 220 are mounted on a rotational plate member 224 capable rotating with respect to the second disk-shaped rotation body 212. When the first magnetic force gear mechanism 210 rotates in response to the rotation of the rotation apparatus 100, the second magnetic force gear mechanisms 220 rotate in a predetermined direction (the same direction in this case) due to the attractive force and the repulsive force between the permanent magnets of the first magnetic force gear mechanism 210 and the permanent magnets of the second magnetic force gear mechanisms 220. The third magnetic force gear mechanism 230 has a fourth disk-shaped rotation body 232 capable of rotating around a fourth rotation axis 231 and a plurality of (six) fourth permanent magnets 233 located at a peripheral part of this fourth disk-shaped rotation body 232 so that N-poles and S-poles of the fourth permanent magnets 233 are alternately distributed. The fourth disk-shaped rotation body 232 has a diameter different from that of the second disk-shaped rotation body 212 and the third disk-shaped rotation body 222. For example, the diameter of the fourth disk-shaped rotation body 232 is smaller than the diameter of the second disk-shaped rotation body 212 and bigger than the diameter of the third disk-shaped rotation body 222. The fourth disk-shaped rotation body 232 has the plurality of fourth permanent magnets 233 with the number different from that of the third permanent magnets 223 of the third disk-shaped rotation body 222. For example, six fourth permanent magnets 233 are arranged on the fourth disk-shaped rotation body 232. When the second magnetic force gear mechanisms 220 rotate, the third magnetic force gear mechanism 230 rotates in a predetermined direction (the opposite direction in this case) due to the attractive force and the repulsive force between the permanent magnets of the second magnetic force gear mechanisms 220 and the permanent magnets of the third magnetic force gear mechanism 230. In this embodiment, the fourth rotation axis 231 is the output shaft connected to the input shaft of the generator 300.

The generator 300 in this embodiment is a device for converting a rotational energy into an electrical energy using the electromagnetic induction operations and a commercially available generator can be used as for the generator 300. The input shaft of the generator 300 is coupled with the output shaft (the fourth rotation axis 231) of the rotation transmission 200.

As described above in detail, the power generation system 1000 of this embodiment includes the rotation apparatus 100, the rotation transmission 200 coupled with the first rotation axis 10 of the rotation apparatus 100, and the power generator 300 coupled with the output shaft 231 of the rotation transmission 200. According to the power generation system of this embodiment, since there is no frictional resistance between the magnetic force gear mechanisms of the rotation transmission 200, loss in energy is extremely little. Thus, output energy can be efficiently taken out to generate electricity. As a result, it is possible to effectively maintain and utilize rotation energy by means of a simple constitution and thus efficient power accumulation can be expected. Also, a space-saving effect can be expected by integrating the rotation apparatus 100 and the rotation transmission 200. Furthermore, the conductivity of the rotation torque can be increased by increasing magnetic force of the first permanent magnets 30. Even more particularly, due to the non-contact operations of the magnetic force gear mechanisms of the rotation transmission 200, when the rotational speed increases, inertia force will act on the magnetic force gear mechanisms to rotate them smoothly.

In the aforementioned embodiment of the rotation apparatus 100, the plurality pairs of electromagnets 40A and 40B are provided outside of the peripheral of the first disk-shaped rotation body 20 at the peripheral part of which the plurality of first permanent magnets 30 are arranged. However, the rotation apparatus according to the present invention is not limited to this example. One pair of electromagnets 40A and 40B may be provided outside of the peripheral of the first disk-shaped rotation body 20.

Also, the number of the first permanent magnets, the number of the second permanent magnets and the number of the sensors in the rotation apparatus 100 are a simple example, and the present invention is not limited to these numbers. For example, these numbers may be changed depending on the size of the apparatus or on the performance of the magnet.

Further, in the rotation apparatus 100 of the aforementioned embodiment, the photo-sensors are used as for the sensor switches 60A and 60B. However, the present invention is not limited to this.

Still further, the rotation transmission 200 of the aforementioned embodiment is configured by a two-stage shifting mechanism with the first magnetic force gear mechanism 210, the second magnetic force gear mechanism 220 and the third magnetic force gear mechanism 230. However, the present invention is not limited to this. Depending upon the desired output speed, one-stage shifting mechanism, or three or more-stage shifting mechanism may be used.

Even more particularly, although the rotation transmission 200 of the aforementioned embodiment uses the magnetic force rotation transmission with the first magnetic force gear mechanism 210, the second magnetic force gear mechanism 220 and the third magnetic force gear mechanism 230, the present invention is not limited to this. Other rotation transmissions using non-magnetic force may be used.

Many widely different embodiments of the present invention may be constructed without departing from the scope of the appended claims. It should be understood that the present invention is not limited to the specific embodiments described in the specification, except as defined in the appended claims.

### DENOTATION OF REFERENCE NUMERALS

10: first rotation axis
11: sidewall
12, 13: bearing
20: first disk-shaped rotation body
30: first permanent magnet
40A, 40B: electromagnet
50A, 50B: sensor perception board
60A, 60B: sensor switch
61A: first photo-sensor
61B: second photo-sensor
62A: first switch
62B: second switch
100: rotation apparatus
200: rotation transmission
210: first magnetic gear mechanism
211: second rotation axis
212: second disk-shaped rotation body
213: second permanent magnet
220: second magnetic gear mechanism
221: third rotation axis
222: third disk-shaped rotation body
223: third permanent magnet
224: rotational plate member
230: third magnetic gear mechanism
231: fourth rotation axis
232: fourth disk-shaped rotation body
233: fourth permanent magnet
300: power generator
400: battery
1000: power generation system
N: N-pole
S: S-pole
W: frame body

## Claims

1. A power generation system (1000) including a rotation apparatus (100), a power generator (300), and a rotation transmission (200) having an input shaft coupled with a first rotation axis (10) of said rotation apparatus (100) to be rotationally driven by said rotation apparatus (100) and an output shaft coupled with said power generator (300) to rotationally drive said power generator (300), for increasing the rotational speed of said output shaft with respect to the rotational speed of said input shaft, said rotation transmission (200) being integrated with said rotation apparatus (100);
said rotation apparatus (100) comprising:
a first disk-shaped rotation body (20) capable of rotating around said first rotation axis (10);
a plurality of first permanent magnets (30) arranged at a peripheral part of said first disk-shaped rotation body (20) so that N-poles and S-poles thereof are distributed alternately;
at least one pair of electromagnets (40A, 40B) arranged at static positions with a predetermined interval, said static positions being near the plurality of first permanent magnets (30) ;
a pair of sensor perception boards (50A, 50B) arranged coaxially with said first disk-shaped rotation body (20); and
a pair of sensor switches (60A, 60B) for respectively detecting rotational positions of the N-poles and the S-poles of the plurality of first permanent magnets (30) and for electrically energizing the at least one pair of electromagnets (40A, 40B),
the pair of sensor perception boards (50A, 50B) having, on their outer circumferential end, convexo-concave portions arranged at positions that respectively correspond to positions of the N-poles and the S-poles of the plurality of first permanent magnets (30), side edges of said convexo-concave portions corresponding to front edges and rear edges of the N-poles or the S-poles, the pair of sensor perception boards (50A, 50B) being mounted on said first rotation axis (10) to displace with each other by a predetermined angle in the rotation direction,
one electromagnet of the pair of electromagnets (40A, 40B) being energized based on the result of the pair of sensor switches (60A, 60B), detected via the pair of sensor perception boards, to move said first permanent magnet (30) adjacent to the energized electromagnet in a predetermined direction, by an attractive force and a repulsive force between the energized electromagnet and the first permanent magnet (30) so as to rotate said first disk-shaped rotation body (20),
wherein the pair of sensor switches (60A, 60B) has a first sensor circuit consisting of a first photo-sensor (61A) and a first switch (62A) for turning on/off a power supply path of a first electromagnet (40A) of the pair of electromagnets (40A, 40B), and a second sensor circuit consisting of a second photo-sensor (61B) and a second switch (62B) for turning on/off a power supply path of a second electromagnet (40B) of the pair of electromagnets (40A, 40B),
wherein said first sensor circuit is configured to detect, via a first sensor perception board (50A) arranged coaxially with said first disk-shaped rotation body (20), the positions of the front edges and the rear edges of the N-poles of the first permanent magnets (30), to energize said first electromagnet (40A) when the position of the front edge of the N-pole of the first permanent magnet (30) is detected and to de-energize said first electromagnet (40A) when the position of the rear edge of the N-pole of the first permanent magnet (30) is detected, and
wherein said second sensor circuit is configured to detect, via a second sensor perception board (50B) arranged coaxially with said second disk-shaped rotation body (212), the positions of the front edges and the rear edges of the S-poles of the first permanent magnets (30), to energize said second electromagnet (40B) when the position of the front edge of the S-pole of the first permanent magnet (30) is detected and to de-energize said second electromagnet (40B) when the position of the rear edge of the S-pole of the first permanent magnet (30) is detected.

2. The power generation system as claimed in claim 1, wherein said rotation transmission (200) comprises a first magnetic gear mechanism (210) having the second disk-shaped rotation body (212) capable of rotating around a second rotation axis (211), and a plurality of second permanent magnets (213) arranged at a peripheral part of said second disk-shaped rotation body (212) so that N-poles and S-poles thereof are distributed alternately; and a second magnetic gear mechanism (230) having a third disk-shaped rotation body (222) capable of rotating around a third rotation axis (221), and a plurality of third permanent magnets (223) arranged at a peripheral part of said third disk-shaped rotation body (222) so that N-poles and S-poles thereof are distributed alternately, and wherein the plurality of second permanent magnets (213) of said first magnetic gear mechanism (210) and the plurality of third permanent magnets (223) of said second magnetic gear mechanism (220) are arranged to close to each other so that said second magnetic gear mechanism (220) rotates in a predetermined direction by means of an attractive force and a repulsive force between the plurality of second permanent magnets (213) and the plurality of third permanent magnets (223) when said first magnetic gear mechanism (210) rotates.

3. The power generation system as claimed in claim 2, wherein a diameter of said second disk-shaped rotation body (212) is larger than a diameter of said third disk-shaped rotation body (222), and wherein said third disk-shaped rotation body (222) is arranged inside of said second disk-shaped rotation body (212).

4. The power generation system as claimed in claim 2, wherein said rotation transmission (200) comprises a third magnetic gear mechanism (230) having a fourth disk-shaped rotation body (232) capable of rotating around a fourth rotation axis (231), and a plurality of fourth permanent magnets (233) arranged at a peripheral part of said fourth disk-shaped rotation body (232) so that N-poles and S-poles thereof are distributed alternately, wherein said third disk-shaped rotation body (222) is arranged inside of said second disk-shaped rotation body (212), and wherein the plurality of third permanent magnets (223) of said second magnetic gear mechanism (220) and the plurality of fourth permanent magnets (233) of said third magnetic gear mechanism (230) are arranged to close to each other so that said third magnetic gear mechanism (230) rotates in a predetermined direction by means of an attractive force and a repulsive force between the plurality of third permanent magnets (223) and the plurality of fourth permanent magnets (233) when said second magnetic gear mechanism (220) rotates.

## Patentansprüche

1. Leistungserzeugungssystem (1000), umfassend eine Rotationsvorrichtung (100), einen Leistungsgenerator (300) und ein Rotationsgetriebe (200) mit einer Eingangswelle, die mit einer ersten Rotationsachse (10) der Rotationsvorrichtung (100) gekoppelt ist, um durch die Rotationsvorrichtung (100) rotierbar angetrieben zu werden, und einer Ausgangswelle, die mit dem Leistungsgenerator (300) gekoppelt ist, um den Leistungsgenerator (300) rotierbar anzutreiben, zum Erhöhen der Rotationsgeschwindigkeit der Ausgangswelle in Bezug auf die Rotationsgeschwindigkeit der Eingangswelle, wobei das Rotationsgetriebe (200) in die Rotationsvorrichtung (100) integriert ist;
wobei die Rotationsvorrichtung (100) Folgendes umfasst:
einen ersten scheibenförmigen Rotationskörper (20), der in der Lage ist, um die erste Rotationsachse (10) zu rotieren;
eine Vielzahl von ersten Permanentmagneten (30), die an einem Umfangsteil des ersten scheibenförmigen Rotationskörpers (20) derart angeordnet sind, dass N-Pole und S-Pole derselben alternierend verteilt sind;
zumindest ein Paar von Elektromagneten (40A, 40B), die an statischen Positionen mit einem vorbestimmten Intervall angeordnet sind, wobei die statischen Positionen nahe der Vielzahl von ersten Permanentmagneten (30) sind;
ein Paar von Sensorerfassungsplatinen (50A, 50B), die koaxial mit dem ersten scheibenförmigen Rotationskörper (20) angeordnet sind; und
ein Paar von Sensorschaltern (60A, 60B) zum jeweiligen Detektieren von Rotationspositionen der N-Pole und der S-Pole der Vielzahl von ersten Permanentmagneten (30) und zum elektrischen Erregen des zumindest einen Paars von Elektromagneten (40A, 40B),
wobei das Paar von Sensorerfassungsplatinen (50A, 50B) an ihrem Außenumfangsende konvex-konkave Abschnitte aufweist, die an Positionen angeordnet sind, welche jeweils Positionen der N-Pole und der S-Pole der Vielzahl von ersten Permanentmagneten (30) entsprechen, wobei Seitenkanten der konvex-konkaven Abschnitte Vorderkanten und Hinterkanten der N-Pole oder der S-Pole entsprechen, wobei das Paar von Sensorerfassungsplatinen (50A, 50B) an der ersten Rotationsachse (10) montiert ist, um sich miteinander um einen vorbestimmten Winkel in Rotationsrichtung zu verschieben,
wobei ein Elektromagnet aus dem Paar von Elektromagneten (40A, 40B) basierend auf dem Ergebnis des Paars von Sensorschaltern (60A, 60B), welches über das Paar von Sensorerfassungsplatinen detektiert wird, erregt wird, um den ersten Permanentmagneten (30) benachbart zu dem erregten Elektromagneten, durch eine Anziehungskraft und eine Abstoßungskraft zwischen dem erregten Elektromagneten und dem ersten Permanentmagneten (30) in eine vorbestimmte Richtung zu bewegen, sodass der erste scheibenförmige Rotationskörper (20) rotiert wird,
wobei das Paar von Sensorschaltern (60A, 60B) eine erste Sensorschaltung, bestehend aus einem ersten Fotosensor (61A) und einem ersten Schalter (62A) zum Ein-/Ausschalten eines Leistungsversorgungspfads eines ersten Elektromagneten (40A) aus dem Paar von Elektromagneten (40A, 40B), und eine zweite Sensorschaltung, bestehend aus einem zweiten Fotosensor (61B) und einem zweiten Schalter (62B) zum Ein-/Ausschalten eines Leistungsversorgungspfads eines zweiten Elektromagneten (40B) des Paars von Elektromagneten (40A, 40B), aufweist,
wobei die erste Sensorschaltung dazu ausgelegt ist, über eine erste Sensorerfassungsplatine (50A), die koaxial mit dem ersten scheibenförmigen Rotationskörper (20) angeordnet ist, die Positionen der Vorderkanten und Hinterkanten der N-Pole der ersten Permanentmagneten (30) zu detektieren, den ersten Elektromagneten (40A) zu erregen, wenn die Position der Vorderkante des N-Pols des ersten Permanentmagneten (30) detektiert wird, und den ersten Elektromagneten (40A) zu entregen, wenn die Position der Hinterkante des N-Pols des ersten Permanentmagneten (30) detektiert wird, und
wobei die zweite Sensorschaltung dazu ausgelegt ist, über eine zweite Sensorerfassungsplatine (50B), die koaxial mit dem zweiten scheibenförmigen Rotationskörper (212) angeordnet ist, die Positionen der Vorderkanten und Hinterkanten der S-Pole der ersten Permanentmagneten (30) zu detektieren, den zweiten Elektromagneten (40B) zu erregen, wenn die Position der Vorderkante des S-Pols des ersten Permanentmagneten (30) detektiert wird, und den zweiten Elektromagneten (40B) zu entregen, wenn die Position der Hinterkante des S-Pols des ersten Permanentmagneten (30) detektiert wird.

2. Leistungserzeugungssystem nach Anspruch 1, wobei das Rotationsgetriebe (200) Folgendes umfasst: einen ersten magnetischen Getriebemechanismus (210), der den zweiten scheibenförmigen Rotationskörper (212), der in der Lage ist, um eine zweite Rotationsachse (211) zu rotieren, und eine Vielzahl von zweiten Permanentmagneten (213) aufweist, die an einem Umfangsteil des zweiten scheibenförmigen Rotationskörpers (212) derart angeordnet sind, dass N-Pole und S-Pole derselben alternierend verteilt sind; und einen zweiten magnetischen Getriebemechanismus (230), der einen dritten scheibenförmigen Rotationskörper (222), der in der Lage ist, um eine dritte Rotationsachse (221) zu rotieren, und eine Vielzahl von dritten Permanentmagneten (223) aufweist, die an einem Umfangsteil des dritten scheibenförmigen Rotationskörpers (222) derart angeordnet sind, dass N-Pole und S-Pole derselben alternierend verteilt sind, und wobei die Vielzahl von zweiten Permanentmagneten (213) des ersten magnetischen Getriebemechanismus (210) und die Vielzahl von dritten Permanentmagneten (223) des zweiten magnetischen Getriebemechanismus (220) nahe zueinander angeordnet sind, sodass der zweite mechanische Getriebemechanismus (220) mithilfe einer Anziehungskraft und einer Abstoßungskraft zwischen der Vielzahl von zweiten Permanentmagneten (213) und der Vielzahl von dritten Permanentmagneten (223) in einer vorbestimmten Richtung rotiert, wenn der erste magnetische Getriebemechanismus (210) rotiert.

3. Leistungserzeugungssystem nach Anspruch 2, wobei ein Durchmesser des zweiten scheibenförmigen Rotationskörpers (212) größer ist als ein Durchmesser des dritten scheibenförmigen Rotationskörpers (222) und wobei der dritte scheibenförmige Rotationskörper (222) innerhalb des zweiten scheibenförmigen Rotationskörpers (212) angeordnet ist.

4. Leistungserzeugungssystem nach Anspruch 2, wobei das Rotationsgetriebe (200) Folgendes umfasst: einen dritten magnetischen Getriebemechanismus (230), der einen vierten scheibenförmigen Rotationskörper (232), der in der Lage ist, um eine vierte Rotationsachse (231) zu rotieren, und eine Vielzahl von vierten Permanentmagneten (233) aufweist, die an einem Umfangsteil des vierten scheibenförmigen Rotationskörpers (232) derart angeordnet sind, dass N-Pole und S-Pole derselben alternierend verteilt sind, wobei der dritte scheibenförmige Rotationskörper (222) innerhalb des zweiten scheibenförmigen Rotationskörpers (212) angeordnet ist und wobei die Vielzahl von dritten Permanentmagneten (223) des zweiten magnetischen Getriebemechanismus (220) und die Vielzahl von vierten Permanentmagneten (233) des dritten magnetischen Getriebemechanismus (230) nahe zueinander angeordnet sind, sodass der dritte mechanische Getriebemechanismus (230) mithilfe einer Anziehungskraft und einer Abstoßungskraft zwischen der Vielzahl von dritten Permanentmagneten (223) und der Vielzahl von vierten Permanentmagneten (233) in einer vorbestimmten Richtung rotiert, wenn der zweite magnetische Getriebemechanismus (220) rotiert.

## Revendications

1. Système de génération d'énergie (1000) incluant un appareil de rotation (100), un générateur d'énergie (300) et une transmission de rotation (200) présentant un arbre d'entrée couplé à un premier axe de rotation (10) dudit appareil de rotation (100) pour être entraîné en rotation par ledit appareil de rotation (100) et un arbre de sortie couplé audit générateur d'énergie (300) pour entraîner en rotation ledit générateur d'énergie (300), pour augmenter la vitesse de rotation dudit arbre de sortie par rapport à la vitesse de rotation dudit arbre d'entrée, ladite transmission de rotation (200) étant intégrée audit appareil de rotation (100) ;
ledit appareil de rotation (100), comprenant :
un premier corps de rotation en forme de disque (20) capable de tourner autour dudit premier axe de rotation (10) ;
une pluralité de premiers aimants permanents (30) agencés au niveau d'une partie périphérique dudit premier corps de rotation en forme de disque (20) de telle sorte que les pôles N et les pôles S de ceux-ci soient distribués de manière alternée ;
au moins une paire d'électroaimants (40A, 40B) agencés à des positions statiques avec un intervalle prédéterminé, lesdites positions statiques étant proches de la pluralité de premiers aimants permanents (30) ;
une paire de cartes de perception de capteur (50A, 50B) agencées de manière coaxiale avec ledit premier corps de rotation en forme de disque (20) ; et
une paire de commutateurs de capteur (60A, 60B) pour détecter respectivement des positions de rotation des pôles N et des pôles S de la pluralité de premiers aimants permanents (30) et pour exciter électriquement la au moins une paire d'électroaimants (40A, 40B),
la paire de cartes de perception de capteur (50A, 50B) présentant, sur leur extrémité circonférentielle extérieure, des parties convexo-concaves agencées dans des positions qui correspondent respectivement à des positions des pôles N et des pôles S de la pluralité de premiers aimants permanents (30), des bords latéraux desdites parties convexo-concaves correspondant à des bords avant et à des bords arrière des pôles N ou des pôles S, la paire de cartes de perception de capteur (50A, 50B) étant montée sur ledit premier axe de rotation (10) pour se déplacer l'une par rapport à l'autre sur un angle prédéterminé dans la direction de rotation,
un électroaimant de la paire d'électroaimants (40A, 40B) étant excité sur la base du résultat de la paire de commutateurs de capteur (60A, 60B), détecté via la paire de cartes de perception de capteur, pour déplacer ledit premier aimant permanent (30) adjacent à l'électroaimant excité dans une direction prédéterminée, par une force d'attraction et une force de répulsion entre l'électroaimant excité et le premier aimant permanent (30) de manière à faire tourner ledit premier corps de rotation en forme de disque (20),
dans lequel la paire de commutateurs de capteur (60A, 60B) présente un premier circuit de capteur constitué d'un premier photocapteur (61A) et d'un premier commutateur (62A) pour activer/désactiver un trajet d'alimentation électrique d'un premier électroaimant (40A) de la paire d'électroaimants (40A, 40B), et un circuit de capteur constitué d'un second photocapteur (61B) et d'un second commutateur (62B) pour activer/désactiver un trajet d'alimentation électrique d'un second électroaimant (40B) de la paire d'électroaimants (40A, 40B),
dans lequel ledit premier circuit de capteur est configuré pour détecter, via une première carte de perception de capteur (50A) agencée de manière coaxiale avec ledit premier corps de rotation en forme de disque (20), les positions des bords avant et des bords arrière des pôles N des premiers aimants permanents (30), pour exciter ledit premier électroaimant (40A) lorsque la position du bord avant du pôle N du premier aimant permanent (30) est détectée, et pour désexciter ledit premier électroaimant (40A) lorsque la position du bord arrière du pôle N du premier aimant permanent (30) est détectée, et
dans lequel ledit second circuit de capteur est configuré pour détecter, via une seconde carte de perception de capteur (50B) agencée de manière coaxiale avec ledit deuxième corps de rotation en forme de disque (212), les positions des bords avant et des bords arrière des pôles S des premiers aimants permanents (30), pour exciter ledit second électroaimant (40B) lorsque la position du bord avant du pôle S du premier aimant permanent (30) est détectée, et pour désexciter ledit second électroaimant (40B) lorsque la position du bord arrière du pôle S du premier aimant permanent (30) est détectée.

2. Système de génération d'énergie selon la revendication 1, dans lequel ladite transmission de rotation (200) comprend un premier mécanisme d'engrenage magnétique (210) présentant le deuxième corps de rotation en forme de disque (212) capable de tourner autour d'un deuxième axe de rotation (211), et une pluralité de deuxièmes aimants permanents (213) agencés au niveau d'une partie périphérique dudit deuxième corps de rotation en forme de disque (212) de telle sorte que les pôles N et les pôles S de ceux-ci soient distribués de manière alternée ; et
un deuxième mécanisme d'engrenage magnétique (230) présentant un troisième corps de rotation en forme de disque (222) capable de tourner autour d'un troisième axe de rotation (221), et une pluralité de troisièmes aimants permanents (223) agencés au niveau d'une partie périphérique dudit troisième corps de rotation en forme de disque (222) de telle sorte que les pôles N et les pôles S de ceux-ci soient distribués de manière alternée, et dans lequel la pluralité de deuxièmes aimants permanents (213) dudit premier mécanisme d'engrenage magnétique (210) et la pluralité de troisièmes aimants permanents (223) dudit deuxième mécanisme d'engrenage magnétique (220) sont agencés pour se rapprocher les uns des autres de telle sorte que ledit deuxième mécanisme d'engrenage magnétique (220) tourne dans une direction prédéterminée au moyen d'une force d'attraction et d'une force de répulsion entre la pluralité de deuxièmes aimants permanents (213) et la pluralité de troisièmes aimants permanents (223) lorsque ledit premier mécanisme d'engrenage magnétique (210) tourne.

3. Système de génération d'énergie selon la revendication 2, dans lequel un diamètre dudit deuxième corps de rotation en forme de disque (212) est supérieur à un diamètre dudit troisième corps de rotation en forme de disque (222), et dans lequel ledit troisième corps de rotation en forme de disque (222) est agencé à l'intérieur dudit deuxième corps de rotation en forme de disque (212).

4. Système de génération d'énergie selon la revendication 2, dans lequel ladite transmission de rotation (200) comprend un troisième mécanisme d'engrenage magnétique (230) présentant un quatrième corps de rotation en forme de disque (232) capable de tourner autour d'un quatrième axe de rotation (231), et une pluralité de quatrièmes aimants permanents (233) agencés au niveau d'une partie périphérique dudit quatrième corps de rotation en forme de disque (232) de telle sorte que les pôles N et les pôles S de ceux-ci soient distribués de manière alternée, dans lequel ledit troisième corps de rotation en forme de disque (222) est agencé à l'intérieur dudit deuxième corps de rotation en forme de disque (212), et dans lequel la pluralité de troisièmes aimants permanents (223) dudit deuxième mécanisme d'engrenage magnétique (220) et la pluralité de quatrièmes aimants permanents (233) dudit troisième mécanisme d'engrenage magnétique (230) sont agencés pour se rapprocher les uns des autres de telle sorte que ledit troisième mécanisme d'engrenage magnétique (230) tourne dans une direction prédéterminée au moyen d'une force d'attraction et d'une force de répulsion entre la pluralité de troisièmes aimants permanents (223) et la pluralité de quatrièmes aimants permanents (233) lorsque ledit deuxième mécanisme d'engrenage magnétique (220) tourne.
